Europäisches Patentamt

European Patent Office

Office européen des brevets

(11) Numéro de publication: **0 465 753 A1**

## DEMANDE DE BREVET EUROPEEN

(21) Numéro de dépôt: **90870108.9**

(22) Date de dépôt: **10.07.90**

(51) Int. Cl.⁵: **D05B 37/06**, B26D 5/04, B26D 5/12

(43) Date de publication de la demande:
**15.01.92 Bulletin 92/03**

(84) Etats contractants désignés:
**DE FR IT**

(71) Demandeur: **N.V. TITAN-BARATTO S.A.**
**Avenue Sleeckx 45**
**B-1030 Bruxelles(BE)**

(72) Inventeur: **De Koninck, Alfons**
**Bouchoutlaan 22**
**B-1810 Wemmel(BE)**

(74) Mandataire: **Van Malderen, Michel et al**
**p.a. Office van Malderen avenue J.S. Bach**
**22/43**
**B-1080 Bruxelles(BE)**

(54) Dispositif et procédé pour le découpage de matériaux sous forme de bande.

(57) La présente invention concerne un dispositif de découpage de matériaux sous forme de bande et/ou de fil caractérisé en ce qu'il comporte une paire de ciseaux constituée de deux lames dont l'une (14) effectue un mouvement de translation par rapport à l'autre (12) qui est solidaire d'un boîtier (11) pouvant effectuer un déplacement de rotation autour d'un premier point d'articulation fixe (3) situé à une de ses extrémités et solidaire du bâti (1), et dans lequel coulisse, entre deux positions extrêmes un support (13) de la lame mobile (14), support (13) étant relié par l'intermédiaire d'une genouillère (6) a la tige (23) de piston (22) d'un vérin (21) lui-même relié par son couvercle (24) a un second point d'articulation (4) fixe également solidaire du bâti (1).

FIG.1

EP 0 465 753 A1

## Objet de l'invention

La présente invention concerne un dispositif et un procédé de découpage de matériaux sous forme de bande, en particulier d'un ruban ou une lisière et éventuellement de fil ou de fil chaînette qu'on a préalablement cousus notamment sur des sacs pour assurer leur fermeture.

## Arrière-plan technologique

Le champ d'application de la présente invention parmi de nombreuses autres applications, s'adresse plus particulièrement aux dispositifs de couture automatique de fermeture par un ruban de sacs circulant en continu sur une bande transporteuse où se pose le problème de découper le ruban de bordure et le fil ayant servi à le coudre lorsque la couture est terminée.

Dans l'état actuel de la technique, on connaît des dispositifs à ciseaux constitués de deux lames actionnées par l'intermédiaire d'un vérin et qui effectuent l'opération de découpage soit par rotation des lames autour d'un point d'articulation fixe, soit par translation relative d'une lame par rapport à l'autre.

Néanmoins, ces deux types de dispositifs présentent l'inconvénient qu'un moyen de guidage doit être prévu à proximité du dispositif de découpage des fils et/ou ruban de bordure de manière à les diriger précisément entre les deux lames de découpage.

Ces dispositifs de guidage constituent en pratique un obstacle important lors du placement du matériau prévu pour la bordure à coudre.

Des solutions à cet inconvénient sont connues. On connaît l'utilisation par exemple, d'un second vérin qui permet de déplacer le dispositif de découpage, en particulier les ciseaux, en dehors de la zone de travail habituelle où s'effectue la couture et le découpage du ruban, dès que l'opération de découpage du ruban et/ou fil, réalisée à l'aide du premier vérin est terminée.

Néanmoins, ces dispositifs sont relativement complexes et coûteux.

## Buts de l'invention

La présente invention vise à éviter les inconvénients de l'art antérieur.

L'invention ainsi que décrite ci-dessous, résout le problème posé ci-avant en proposant un dispositif qui effectue un mouvement de découpage en quatre étapes cinématiquement distinctes, par lequel les ciseaux se situent, avant et après le mouvement de découpage proprement dit, complètement en dehors de la zone de travail où s'effectue la couture et qui ne nécessite l'utilisation que d'un seul vérin linéaire à double effet.

L'avantage obtenu par la présente invention est d'obtenir à l'aide d'un dispositif mécaniquement plus simple une garantie de meilleur fonctionnement tout en assurant que le dispositif remplisse les exigences posées c'est-à-dire le découpage en un endroit bien déterminé et ensuite le retrait du dispositif de découpage hors du domaine de découpage.

D'autres buts et avantages apparaîtront dans la description qui suit.

## Principaux éléments caractéristiques de l'invention

La présente invention concerne un dispositif de découpage de matériaux sous forme de bande et/ou de fil caractérisé en ce qu'il comporte une paire de ciseaux constituée de deux lames dont l'une effectue un mouvement de translation par rapport à l'autre qui est solidaire d'un boîtier pouvant effectuer un déplacement de rotation autour d'un premier point d'articulation fixe situé à une de ses extrémités et solidaire du bâti, et dans lequel coulisse, entre deux positions extrêmes un support de la lame mobile, le support étant relié par l'intermédiaire d'une genouillère à la tige de piston d'un vérin lui-même relié par son couvercle à un second point d'articulation fixe également solidaire du bâti.

Le mouvement de découpage s'effectue en un cycle de quatre étapes. La position de repos est la position dans laquelle se trouve le dispositif lorsqu'il n'effectue pas de découpage et elle est représentée par la position dans laquelle le vérin se trouve en complète extension et dans laquelle les ciseaux sont ouverts et se situent en dehors de la zone de travail où s'effectue le découpage.

La première étape consiste à abaisser les ciseaux toujours ouverts de la position de repos vers la position de travail où s'effectuera le découpage du matériau, ceci est réalisé par rotation autour du premier point d'articulation fixe en effectuant une rétraction partielle du piston dans le vérin.

La seconde étape consiste à amener le piston à rétraction complète dans le vérin, ce qui provoque la fermeture des ciseaux par translation de la lame mobile par rapport à la lame fixe et le découpage de la bande.

La troisième étape consiste à réouvrir les ciseaux toujours dans la position de travail par une extension partielle du piston dans le vérin.

La quatrième étape consiste à ramener les ciseaux dans la position de repos par rotation autour du premier point d'articulation fixe en effectuant une extension complète du piston.

## Brève description des figures

- La figure 1    représente une vue schématique latérale d'une forme d'exécution préférée du dispositif selon l'invention dans l'état de repos défini ci-dessus.

- La figure 2    représente les trois états dans
lesquels se trouve le dispositif
lors du cycle de quatre étapes.

## Description d'un mode d'exécution préféré de l'invention

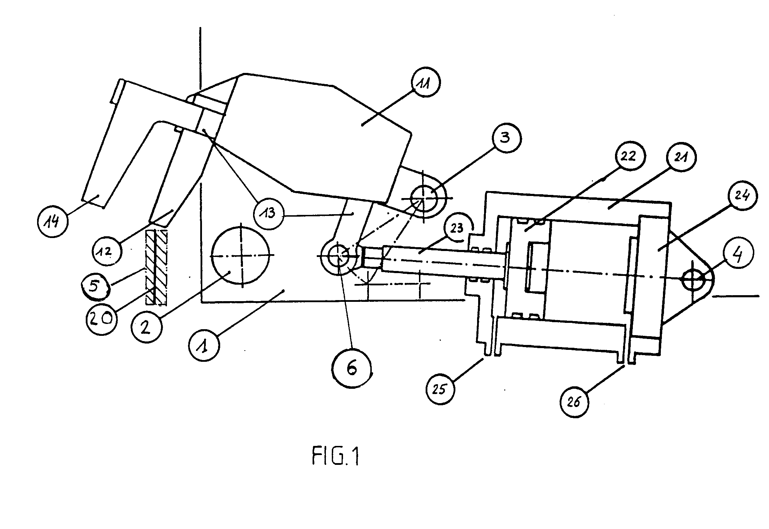

La figure 1 représente un dispositif selon un mode d'exécution préféré de l'invention dans la position de repos, c'est-à-dire la position dans laquelle se trouve le dispositif lorsqu'il n'effectue pas d'opération de découpage, c'est-à-dire en dehors de la zone de travail 5.

Ce dispositif comporte une paire de ciseaux constituée de deux lames dont l'une 12 est fixée à un boîtier 11 et l'autre 14 est solidaire d'un support 13 qui coulisse entre deux positions extrêmes dans le boîtier réalisant ainsi un mouvement de translation de la lame mobile 14 par rapport à la lame fixe 12, nécessaire au découpage de la bande 20 se trouvant dans la zone de travail 5 (représenté en coupe dans la figure 1). Ce boîtier 11 peut effectuer une rotation autour d'un premier point d'articulation fixe 3 jusqu'à ce qu'un dispositif d'arrêt, en l'occurrence une butée 2 bloque le boîtier 11 en position horizontale en plaçant les deux lames 14 et 12 de part et d'autre de la bande 20 à découper située dans la zone de travail 5.

Le support 13 de la lame mobile 14 est relié via un point d'articulation de type genouillère 6 à la tige de piston 23 d'un vérin 21 à double effet linéaire.

Ce vérin 21, de préférence du type à commande pneumatique, est fixé par son couvercle à un autre point d'articulation 4 qui est solidaire du bâti 1 et autour duquel le vérin 21 peut effectuer un faible déplacement de rotation.

En choisissant de manière appropriée les deux points d'articulation 3 et 4 fixes et solidaires du bâti, la longueur de course du vérin 21 à double effet linéaire ainsi que celle du dispositif limitant le mouvement de translation de la lame mobile 14, et enfin en choisissant la position du dispositif arrêt 2 limitant la rotation du boîtier 11 autour du premier point d'articulation 3, on peut déterminer précisément la direction et la position dans lesquelles s'effectuera le découpage de la bande 20 mais également la position dans laquelle se retrouvent les ciseaux après que l'on ait effectué le découpage dans la zone de travail 5, à savoir lorsqu'ils se trouvent dans la position de repos.

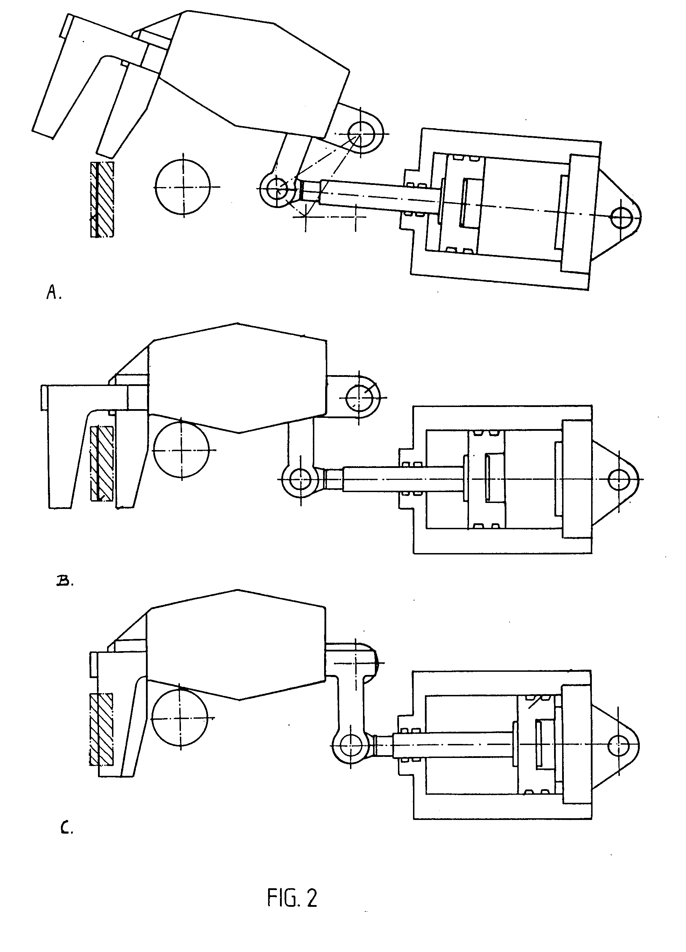

La figure 2 représente trois états intermédiaires par lesquels passe le dispositif de découpage lorsqu'il effectue le cycle complet de découpage.

La figure 2A représente l'état de repos dans lequel le piston 22 du vérin est situé dans l'état d'extension complète. Dans cet état, la tige 23, exerçant une poussée sur le support 13 de la lame, permet l'ouverture des ciseaux et le déplacement du boîtier 11 hors de la zone de travail 5.

Par admission d'air par le canal d'arrivée 25 (voir figure 1), le piston commence sa course de rétraction. Le retrait de la tige 23 provoque la rotation du boîtier 11 autour du point d'articulation 3 jusqu'à ce qu'elle soit empêchée par un dispositif d'arrêt approprié, à savoir une butée 2, solidaire du bâti.

Dans ce cas, le dispositif se trouve dans l'état représenté à la figure 2B.

Ensuite le piston 22 continue à se rétracter jusqu'à fin de course dans le vérin 21 en tirant à lui le support de lame 13 provoquant ainsi la fermeture des ciseaux sur la bande 20. Cet état est représenté par la figure 2C.

A ce moment, le piston repart en élongation par admission d'air par le canal d'arrivée 26 (représenté à la figure 1)ce qui permet d'ouvrir à nouveau les lames de ciseaux et le dispositif se retrouve à nouveau dans l'état représenté à la figure 2B.

Pour revenir à son point de départ, le piston termine sa course d'élongation provoquant ainsi la rotation du boîtier 11 autour du point d'articulation 3 afin que ce boîtier et les ciseaux se placent en dehors de la zone de travail.

L'exemple d'exécution préféré du dispositif a été décrit pour l'application particulière de bandes servant de ruban de bordure cousu sur des sacs circulant en continu sur une bande transporteuse.

Il est bien entendu que ce dispositif peut être utilisé dans de nombreuses autres applications; il est donc évident que l'exemple décrit précédemment n'est qu'une représentation donnée à titre d'illustration et de manière non limitative de la présente invention.

## Revendications

1. Dispositif de découpage de matériaux sous forme de bande et/ou de fil ou de fil chaînette caractérisé en ce qu'il comporte une paire de ciseaux constituée de deux lames (12, 14) solidaire d'un boîtier (11) qui peut effectuer un déplacement de rotation autour d'un premier point d'articulation fixe (3) situé à une de ses extrémités et dans lequel coulisse un support (13) qui permet d'actionner les ciseaux, le support (13) étant relié par l'intermédiaire d'une genouillère (6) à la tige de piston (23) d'un vérin (21) lui-même relié par son extrémité à un second point d'articulation fixe (4).

**2.** Dispositif selon la revendication 1 caractérisé en ce que la paire de ciseaux est constituée de deux lames (12, 14) dont l'une (14) effectue un mouvement de translation par rapport à l'autre (12).

**3.** Dispositif selon la revendication 1 ou 2 caractérisé en ce que le support (13) de lame coulisse entre deux positions extrêmes.

**4.** Dispositif selon l'une quelconque des revendication précédentes caractérisé en ce que le mouvement de rotation du boîtier (11) autour du premier point d'articulation (3) est limité par un dispositif d'arrêt (2), de préférence par une butée.

**5.** Dispositif selon l'une quelconque des revendications précédentes caractérisé en ce que le premier et le second point d'articulation fixe (3, 4) et éventuellement le dispositif d'arrêt (2) sont solidaires du bâti.

**6.** Dispositif selon l'une quelconque des revendications précédentes caractérisé en ce que le vérin (21) est du type à commande pneumatique, de préférence à double effet.

**7.** Dispositif selon l'une quelconque des revendications précédentes caractérisé en ce que le mouvement de découpage du matériau s'effectue en un cycle à quatre étapes cinématiquement différentes à partir de la position de repos représentée par la position dans laquelle le vérin (21) se trouve en complète extension et dans laquelle les ciseaux (12,14) sont ouverts et se situent en dehors de la zone de travail (5).

**8.** Dispositif selon la revendication 5 caractérisé en ce que la première étape consiste à abaisser les ciseaux (12, 14) toujours ouverts de la position de repos vers la position de travail (5) où s'effectuera le découpage du matériau (20), par rotation autour du premier point d'articulation (3) fixe en effectuant une rétraction partielle du piston (22) dans le vérin (21);

la seconde étape consiste à amener le piston (22) à rétraction complète dans le vérin (21), ce qui provoque la fermeture des ciseaux par translation de la lame mobile (14) par rapport à la lame fixe (12) et le découpage de la bande (20);

la troisième étape consiste à réouvrir les ciseaux (12, 14) toujours dans la position (5) de travail par une extension partielle du piston (22) dans le vérin; et

la quatrième étape consiste à ramener les ciseaux (12, 14) dans la position de repos par rotation autour du premier point d'articulation (3) fixe en effectuant une extension complète du piston (12).

**9.** Procédé de découpage de matériaux sous forme de bande et/ou fil caractérisé en ce qu'il comporte quatre étapes cinématiquement différentes à partir d'une position de repos représentée par la position dans laquelle un vérin (21) se trouve en complète extension et dans laquelle des ciseaux (12, 14) sont ouverts et se situent en dehors de la zone de travail (5),

la première étape consistant à abaisser les ciseaux (12, 14) toujours ouverts de la position de repos vers la position de travail (5) où s'effectuera le découpage du matériau, par rotation autour d'un premier point d'articulation fixe (3) en effectuant une rétraction partielle du piston (22) dans le vérin (21);

la seconde étape consistant à amener le piston (22) à rétraction complète dans le vérin (21), ce qui provoque la fermeture des ciseaux (12, 14) par translation de la lame mobile (14) par rapport à la lame fixe (12);

la troisième étape consistant à réouvrir les ciseaux (12, 14) toujours dans la position de travail (5) par une extension partielle du piston (22) dans le vérin; et

la quatrième étape consistant à ramener les ciseaux (12, 14) dans la position de repos par rotation autour du premier point d'articulation (3) fixe en effectuant une extension complète du piston (22).

**10.** Utilisation du dispositif selon l'une quelconque des revendications 1 à 8 pour la découpe d'un ruban ou lisière de fermeture de sacs circulant en continu sur une bande transporteuse.

FIG.1

A.

B.

C.

FIG. 2

**Office européen
des brevets**

**RAPPORT DE RECHERCHE
EUROPEENNE**

Numéro de la demande

**EP 90 87 0108**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | GB-A-2 210 904   (ROCKWELL-RIMOLDI SPA)<br>* page 7, lignes 29 - 34 *<br>– – – | 1 | D 05 B 37/06<br>B 26 D 5/04<br>B 26 D 5/12 |
| A | FR-A-2 535 353   (NECCHI SPA)<br>* le document en entier *<br>– – – | 1 | |
| A | US-A-3 550 545   (W.C. CREMER)<br>– – – | | |
| A | US-A-1 977 488   (P.L. O'DONNELL)<br>– – – | | |
| A | DE-A-3 426 283   (WEDA ROLAND WERNER GMBH)<br>– – – – – | | |

**DOMAINES TECHNIQUES
RECHERCHES (Int. Cl.5)**

D 05 B
B 26 D
D 06 H
B 23 D
B 65 B

**Le présent rapport de recherche a été établi pour toutes les revendications**

| Lieu de la recherche | Date d'achèvement de la recherche | Examinateur |
|---|---|---|
| La Haye | 19 mars 91 | D HULSTER E.W.F. |

CATEGORIE DES DOCUMENTS CITES
X : particulièrement pertinent à lui seul
Y : particulièrement pertinent en combinaison avec un
     autre document de la même catégorie
A : arrière-plan technologique
O : divulgation non-écrite
P : document intercalaire
T : théorie ou principe à la base de l'invention

E : document de brevet antérieur, mais publié à la
     date de dépôt ou après cette date
D : cité dans la demande
L : cité pour d'autres raisons
-----------------------------------------------------------------
& : membre de la même famille, document
     correspondant